# EUROPÄISCHE PATENTSCHRIFT

(11) **EP 4 003 773 B1**
(45) Veröffentlichungstag und Bekanntmachung des Hinweises auf die Patenterteilung: **08.03.2023**
(21) Anmeldenummer: 20768022.4
(22) Anmeldetag: 07.09.2020
(51) Int. Cl.: B60K 37/02, B60K 37/06, B60S 1/56, G06F 3/0482, G06F 3/0484, G06F 3/0488

(54) **VERFAHREN UND VORRICHTUNG ZUR AKTIVIERUNG EINES REINIGUNGSMODUS EINER TOUCHBEDIENBAREN SCHALTFLÄCHE**
METHOD AND DEVICE FOR ACTIVATING A CLEANING MODE OF A TOUCH-OPERABLE COMMAND PANEL
PROCÉDÉ ET DISPOSITIF D'ACTIVATION D'UN MODE DE NETTOYAGE D'UN PANNEAU DE COMMANDE TACTILE

(30) Priorität: 21.10.2019 DE 102019007300
(43) Veröffentlichungstag der Anmeldung: 01.06.2022
(73) Patentinhaber: Mercedes-Benz Group AG, 70372 Stuttgart (DE)
(72) Erfinder: TARAYAN, Emin, 71065 Sindelfingen (DE)
(74) Vertreter: JENSEN & SON
(86) Internationale Anmeldenummer: PCT/EP2020/074889
(87) Internationale Veröffentlichungsnummer: WO 2021/078434

(56) Entgegenhaltungen:
- EP-A1- 1 092 184
- EP-B1- 1 092 184
- WO-A1-2018/147255
- US-A1- 2012 206 384
- US-A1- 2017 060 316

## Beschreibung

Die Erfindung betrifft ein Verfahren und eine Vorrichtung eingerichtet zur Erkennung eines Reinigungsvorganges einer Schaltfläche und Aktivierung eines Reinigungsmodus. Eine Bedienung von Funktionen mittels berührungsempfindlichen Schaltflächen finden in modernen Kraftfahrzeugen zunehmend Anwendung. Die Betätigung hinterlässt unvermeidliche Fingerabdrücke auf der Oberfläche der Schaltflächen, wodurch eine häufige Reinigung erforderlich wird, wie zum Beispiel in WO 2018/147255 A1, EP 1 092184 A1, US 2012/206384 A1 oder US 2017/060316 A1 offenbart.

Aus der Offenlegung US 20180136833 A1 ist eine Anordnung mit einem Touchscreen bekannt, die zur Erkennung von auf dem Touchscreen mit einem Finger oder einem Eingabemittel ausgeführten vorgegebenen Gesten ausgeführt ist. Bei Detektion der vorgegebenen Gesten wird ein Reinigungsmodus aktiviert, bei dem zur Vermeidung von Fehlbetätigung während eines Reinigungsvorgangs der Touchscreen inaktiv geschaltet wird. Nachteil der offenbarten Anordnung ist, dass eine Reinigung mit einem Reinigungsmittel immer eine vorausgehende explizite Eingabe der vorgegebenen Geste erfordert. Bevor die Reinigung mit einem Reinigungsmittel wie einem Tuch erfolgen kann, muss die Geste mit einem Finger oder einem speziellen Bedienelement ausgeführt werden. Aufgabe der Erfindung ist demgegenüber ein Verfahren und eine Vorrichtung bereitzustellen, mittels welchen eine komfortablere Aktivierung des Reinigungsmodus ermöglicht ist.

Die Aufgabe wird durch ein Verfahren zur Aktivierung eines Reinigungsmodus mit den Merkmalen des Anspruchs 1 sowie einer Vorrichtung gemäß Anspruch 9 gelöst. Die abhängigen Ansprüche definieren bevorzugte und vorteilhafte Ausführungsformen der vorliegenden Erfindung.

Bei dem erfindungsgemäßen wird die Schaltfläche mit einer Kamera überwacht und eine den Reinigungsmodus aktivierende Betätigung wird bei Erkennung eines von einer Hand eines Nutzers auf der Schaltfläche geführten oder gehaltenen Reinigungsmittels detektiert. Bei Erkennung des von der Hand des Nutzers auf der Schaltfläche geführten Reinigungsmittels wird der Reinigungsmodus aktiviert. Die Kamera erfasst, dass eine Hand eines Nutzers ein Reinigungsmittel, d.h. beispielsweise ein Reinigungstuch, ein Schwamm, ein Vlies oder ähnliches auf die Oberfläche der Schaltfläche legt. Einhergehend mit Erkennung des Reinigungsmittels auf der Oberfläche der Schaltfläche wird der Reinigungsmodus aktiviert, um eine Fehlbetätigung der Schaltflächen durch ein feuchtes Reinigungsmittel auf einem kapazitiven oder induktiven Display oder einem vom Tuch abgleitenden Finger zu vermeiden. Entsprechend wird bei einem druckempfindlichen wie beispielsweise einem resistiven Display eine Fehlbetätigung vermieden. Die eine oder mehrere Kameras sind im Dachhimmel zu Erfassung von Objekten und Gesten der Insassen angeordnet. Beispielsweise ist eine Kamera im Bereich zwischen Fahrer- und Beifahrersitz im Dachhimmel angeordnet, so dass Fahrer- und Beifahrergesten insbesondere über Displays erfassbar sind. Die Kamera umfassend ein zugehöriges Steuergerät ist eingerichtet eingelernt Gesten und Objekte zu erkennen. Hierzu wird beispielsweise ein von dem Steuergerät umfasstes neuronales Netzwerk trainiert, bis eine Erkennung der Gesten und Objekte mit ausreichend hoher Wahrscheinlichkeit gewährleistet ist. Die Schaltfläche umfasst Betätigungsfelder wie Icons, denen jeweils eine Funktion zugeordnet ist. Mit Aktivierung des Reinigungsmodus werden die Betätigungsfelder zumindest teilweise inaktiv geschaltet, d.h. weder durch Berührung oder Druck auf die Betätigungsfelder wird eine der Schaltfläche zugeordnete Funktion ausgeführt. Die Schaltfläche ist beispielsweise als Touchpad, als Touchdisplay oder als touchbedienbares Bedienfeld ausgeführt. Die Schaltfläche arbeitet beispielsweise nach einem kapazitiven, induktiven oder resistiven Verfahren. In vorteilhafter Weise ermöglicht das erfindungsgemäße Verfahren eine Reinigung der Schaltflächenoberfläche, ohne explizit einem Reinigungsmodus einschalten zu müssen. Mit der Erkennung des Reinigungsmittels kann bereits frühzeitig, d.h. bevor eine Fehlauslösung durch eine Wischbewegung erfolgt ist, der Reinigungsmodus aktiviert werden. Insbesondere bei einer Reinigung mittels einem ggfs. teilweise feuchten Reinigungsmittel lässt sich die aus dem Stand der Technik bekannt Aktivierungsgeste auf einem Touchdisplay nicht ausführen. Ein Nutzer müsste demgemäß zuerst mit seinem Finger die Aktivierungsgeste ausführen, um danach die Reinigung mit dem Reinigungsmittel durchführen zu können.

In Ausgestaltung des Verfahrens wird die Schalfläche mit einer Kamera überwacht und der Reinigungsmodus aktiviert, sofern für eine Reinigung charakteristischen Bewegung der Hand des Nutzers erkannt wird. Die charakteristischen Bewegungen sind beispielweise für einen Reinigungsvorgang immanente Wisch- oder Kreisbewegungen.

Durch eine Erkennung der charakteristischen Bewegung zusätzlich zur Erkennung des Reinigungsmittels mittels der Kamera, ist in vorteilhafter Weise die Erkennungswahrscheinlichkeit eines Reinigungsvorganges deutlich erhöht. Je höher die Erkennungswahrscheinlichkeit ist, desto geringer ist eine fehlerhafte Aktivierung des Reinigungsmodus.

In einer alternativen oder zusätzlichen Ausführungsform wird der Reinigungsmodus aufgrund einer mittels der touchbedienbaren Schaltfläche erkannten charakteristischen Bewegung des von der Hand des Nutzers geführten Reinigungsmittels aktiviert. Die der Bewegung des Reinigungsmittels zurückgelegte Spur wird durch die Touchsensoren der Schaltfläche ermittelt. Bei Übereinstimmung oder Ähnlichkeit der Spur mit einer vorgegebenen charakteristischen Spur eines Wischvorganges kann von einem Reinigungsvorgang ausgegangen werden und der Reinigungsmodus aktiviert werden. Durch die Erkennung einer charakteristischen Bewegung mittels Touchsensoren kann in Ergänzung zu einer Erkennung durch die Kamera die Erkennungswahrscheinlichkeit eines Reinigungsvorganges weiter erhöht werden.

In weiterer Ausgestaltung des Verfahrens, wir die Aktivierung des Reinigungsmodus mit einer haptischen, optischen und/oder akustischen Rückmeldung bestätigt. Die haptische Rückmeldung ist beispielsweise ein durch einen Aktor bewirktes Vibrieren der Schaltfläche. Die optische Rückmeldung erfolgt an einem Touchdisplay beispielsweise durch Anzeige eines einen Wischvorgang darstellenden Bildes, durch Anzeige des Betriebszustandes "Reinigungsmodus", alternativ kann der Bildschirm auch dunkel geschaltet werden.

In einer weiteren bevorzugten Ausführungsform wird der Reinigungsmodus nur in einem vorgegebenen Fahrgeschwindigkeitsbereich aktiviert. Beginnt beispielsweise ein Fahrer oberhalb einem vorgegebenen Geschwindigkeitsbereich den Bildschirm zu reinigen, wird der Reinigungsmodus zur Vermeidung von Fahrerablenkung nicht in den Reinigungsmodus versetzt. Bei einer durch das Reinigungsmittel oder die charakteristische Bewegung detektierte Reinigungsabsicht wird eine Warnmeldung an den Fahrer ausgegeben. Die Warnmeldung umfasst eine Information, dass der Reinigungsmodus nicht zur Verfügung steht und/oder eine Aufforderung, die Konzentration auf den Verkehr zu richten. In vorteilhafter Weise vermindert das Verfahren eine Verkehrsgefährdung durch Ablenkung.

In einer modifizierten Ausführungsform sind für Fahrer und Beifahrer unterschiedliche Fahrgeschwindigkeitsbereiche für eine Aktivierung eines Reinigungsmodus vorgegeben. Hierbei detektiert die Kamera, wer das Reinigungsmittel in der Hand hält bzw. wer das Reinigungsmittel auf die Oberfläche der Schaltfläche führt oder wer die charakteristische Handbewegung durchführt. In einer Ausführungsform wird der Reinigungsmodus bei Betätigung durch den Beifahrer im gesamten Geschwindigkeitsbereich des Fahrzeugs aktiviert, hingegen bei Betätigung durch den Fahrer nur bis zu einer vorgegebenen Geschwindigkeitsschwelle. Das Verfahren ermöglicht zur Bereitstellung einer maximalen Verfügbarkeit eine Unterscheidung zwischen verschiedenen Bedienpersonen.

In einer modifizierten Ausführungsform wird der Reinigungsmodus beendet, sobald die Kamera für eine vorgegebene Zeitdauer kein Reinigungsmittel und/oder eine Bedienung mit einem Finger erkannt wird. Das erfindungsgemäße Verfahren stellt eine automatisierte Beendigung des Reinigungsmodus zur Verfügung.

Die erfindungsgemäße Vorrichtung umfasst eine Kamera, die eine den Reinigungsmodus aktivierende Betätigung erfasst, wobei die aktivierende Betätigung ein von einer Hand eines Nutzers auf der Displayoberfläche geführtes Reinigungsmittels beinhaltet. Die erfindungsgemäße Vorrichtung ermöglicht zur Verhinderung von Fehlbedienung eine automatisierte Umschaltung der Schaltfläche in einen Reinigungsmodus.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist.

Dabei zeigen:
- Fig. 1: Fahrzeuginnenraum mit Kamera und
- Fig. 2: Ablaufdiagramm des erfindungsgemäßen Verfahrens.

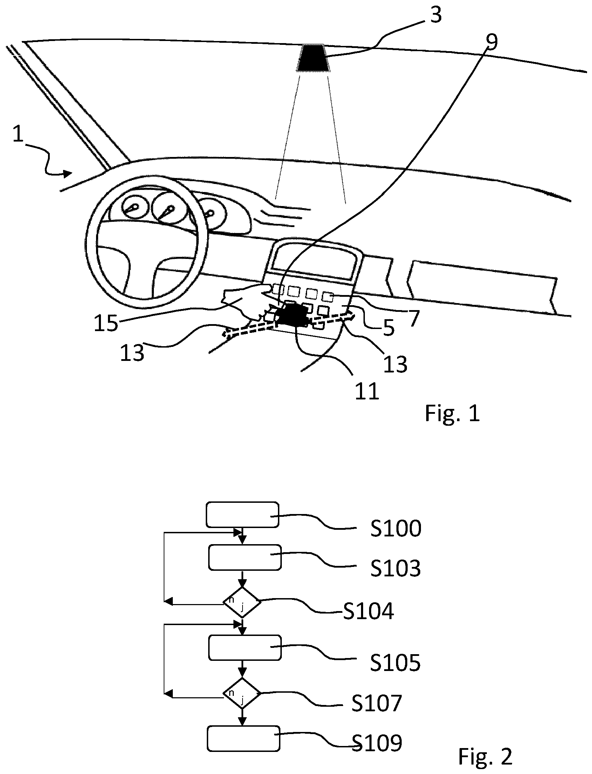

Fig.1 zeigt einen Fahrzeuginnenraum 1, der von einer Kamera 3 überwacht wird. In der Mittelkonsole ist eine als Touchdisplay 5 ausgeführte Schaltfläche mit mehreren Betätigungsfeldern 7, von denen zur besseren Übersichtlichkeit nur eines mit einem Bezugszeichen gekennzeichnet ist, angeordnet.

Den Betätigungsfeldern 7 zugeordnet sind Fahrzeugfunktionen, die durch Berührung mit einem Finger eines Nutzers aufrufbar sind. Die Fahrzeugfunktionen betreffen beispielsweise eine Lautstärkenregelung ein Entertainmentsystem, eine Aktivierung eines Navigationssystems, eine Kofferraum- oder Türöffnung, ein Notruf etc.

Durch die Fingerberührung werden auf dem Display Fingerabdrücke hinterlassen. Die Fingerabdrücke oder sonstige Verschmutzungen sind vom Nutzer mit einem Reinigungsmittel 11 wie einem vorzugsweise befeuchteten Tuch zu reinigen.

Eine charakteristische, durch Pfeile angedeutete Bewegung 13 des durch eine Hand eines bzw. einen Finger des Nutzers geführten Reinigungsmittels 11 würde bewirken, dass die die Betätigungsfelder 7 unkoordiniert berührt und ungewollt Funktionen aktiviert werden. Um diese Art der Fehlbetätigung zu vermeiden wird das Touchdisplay 5 mittels der Kamera 3 überwacht.

Die Kamera ist darauf trainiert, die charakteristischen Bewegungen der Hand 15 und/oder darüber hinaus das Reinigungsmittel 11 selbst zu erkennen. Das Eintrainieren der Kamera, d.h. der Kamera und zugehöriger Auswerteinheit erfolgt nach aus dem Stand der Technik bekannten Verfahren, beispielsweise mittels einem neuronalen Netz. Sobald eine charakteristische Bewegung 11 und/oder ein Reinigungsmittel 11 erkannt wird, wird das Touchdisplay 5 in einen Reinigungsmodus umgeschaltet. Der Reinigungsmodus bewirkt, dass die Betätigungsfelder 7 passiv geschaltet werden und eine Berührung mit dem Reinigungsmittel 11 oder mit einem neben dem Reinigungsmittel 11 geführten Finger der Hand 15 zu unterbinden.

In einer weiteren Variante wird die Erkennungswahrscheinlichkeit eines Reinigungsvorganges erhöht, indem zusätzlich die Bewegung des Reinigungsmittels 11 mittels der Sensorik des Touchdisplays 5 ausgewertet wird. Aus der durch die Bewegung des Reinigungsmittels 11 bewirkten und von den Sensoren des Touchdisplays ermittelten Spur lässt sich auf eine für einen Reinigungsvorgang charakteristische Bewegung schließen. Die durch das Touchdisplay 5 erkannten Bewegungen lassen sich mit den durch die Kamera 3 erkannten Bewegungen und Objekten vorteilhaft plausibilisieren.

In Fig. 2 ist ein Ablaufdiagramm einer Variante eines mit der in Fig. 1 gezeigten Vorrichtung durchführbaren Verfahrens dargestellt. Im Schritt S100 wird eine Überwachung des Touchdisplays 5 durch die Kamera 3 beispielsweise beim Fahrzeugstart aktiviert. Im Schritt S103 erkennt die Kamera 3 ein von einer Nutzerhand auf dem Touchdisplay 5 geführtes, d.h. aufgelegtes Reinigungsmittel 11 und /oder ein in einer charakteristischen Bewegung 13 geführtes Reinigungsmittel 11. Im Schritt S104 wird geprüft, ob die Bedingungen für einen Reinigungsmodus erfüllt sind, d.h. fährt das Fahrzeug in einem vorgegebenen Geschwindigkeitsbereich und/oder ist beispielsweise Fahrer oder Beifahrer im aktuellen Geschwindigkeitsbereich für eine Reinigung autorisiert. Sind die Bedingungen nicht erfüllt wird auf Schritt S103 zurückgesprungen. Gleichzeitig wird dem Nutzer eine Meldung ausgegeben, dass in dem aktuellen Fahrzustand eine Reinigung des Bildschirms nicht freigegeben ist. Sind die Bedingungen erfüllt wird im Schritt S105 das Touchdisplay 5 passiv, d.h. in den Reinigungsmodus geschaltet. Die Umschaltung in den Reinigungsmodus wird dem Nutzer auf dem Touchdisplay 5 visuell angezeigt. Im Schritt S107 wird überprüft, ob die Bedingungen für den Reinigungsmodus weiter erfüllt sind. Sofern die Bedingungen weiter erfüllt sind wird auf Schritt S105 zurückgesprungen, sind die Bedingungen nicht mehr erfüllt, wird das Touchdisplay 5 im Schritt S109 wieder für eine bestimmungsgemäße Betätigung aktiviert. Die Bedingungen für einen Reinigungsmodus sind nicht mehr erfüllt, wenn für einen vorgegebenen Zeitraum kein Reinigungsmittel oder kein in der für einen Reinigungsvorgang charakteristischen Bewegung geführtes Reinigungsmittel erkannt wird oder wenn die Kamera 3 eine Betätigung des Touchdisplays 5 mit einem bloßen Finger 9 der Nutzerhand 15, d.h. ohne Reinigungsmittel 11 erkennt.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche definiert wird.

## Patentansprüche

1. Verfahren zur Aktivierung eines Reinigungsmodus einer touchbedienbaren Schaltfläche eines Kraftfahrzeugs, wobei im Reinigungsmodus die Schaltfläche zur Vermeidung einer unabsichtlichen Betätigung zumindest teilweise inaktiv geschaltet wird (S105),
**dadurch gekennzeichnet, dass**
- die Schaltfläche mit einer Kamera überwacht (S100) wird und
- eine den Reinigungsmodus aktivierende Betätigung mittels der Kamera detektiert wird, wobei die aktivierende Betätigung ein von einer Hand eines Nutzers auf der Schaltfläche geführtes Reinigungsmittel (S103) umfasst.

2. Verfahren nach Anspruch 1,
**dadurch gekennzeichnet, dass**
die den Reinigungsmodus aktivierende Betätigung eine charakteristische Bewegung der Hand des Nutzers (S103) umfasst.

3. Verfahren nach Anspruch 1 oder 2,
**dadurch gekennzeichnet, dass**
die den Reinigungsmodus aktivierende Betätigung durch Erkennung einer charakteristischen Bewegung der Hand des Nutzers mittels Sensoren der touchbedienbaren Schaltfläche detektiert wird.

4. Verfahren nach einem der Ansprüche 1 bis 3,
**dadurch gekennzeichnet, dass**
die Aktivierung des Reinigungsmodus der Schaltfläche mit einer haptischen oder optischen Rückmeldung bestätigt wird (S105).

5. Verfahren nach einem der Ansprüche 1 bis 4,
**dadurch gekennzeichnet, dass**
der Reinigungsmodus nur in einem vorgegebenen Fahrgeschwindigkeitsbereich aktiviert wird (S104).

6. Verfahren nach Anspruch 5,
**dadurch gekennzeichnet, dass**
für Fahrer und Beifahrer unterschiedliche Fahrgeschwindigkeitsbereiche vorgegeben sind (S104).

7. Verfahren nach einem der Ansprüche 1 bis 6,
**dadurch gekennzeichnet, dass**
der Reinigungsmodus beendet wird sobald für eine vorgegebene Zeitdauer kein Reinigungsmittel und/oder mittels der Kamera eine Bedienung mit einem Finger erkannt wird (S107).

8. Vorrichtung eines Kraftfahrzeugs eingerichtet zur Erkennung einer einen Reinigungsmodus aktivierenden Betätigung einer Schaltfläche (5),
**dadurch gekennzeichnet, dass**
die Vorrichtung eine die aktivierende Betätigung erfassende Kamera (3) umfasst, wobei die aktivierende Betätigung ein von einer Hand (15) eines Nutzers auf der Schaltfläche (5) geführtes Reinigungsmittel (11) beinhaltet.

9. Vorrichtung nach Anspruch 9,
**dadurch gekennzeichnet, dass**
die Schaltfläche (5) als Touchdisplay ausgeführt ist.

## Claims

1. Method for activating a cleaning mode of a touch-operable control panel of a motor vehicle, wherein the control panel is at least partially switched inactive (S105) in the cleaning mode to avoid an unintended operation,
**characterised in that**
- the control panel is monitored by a camera (S100) and
- an operation activating the cleaning mode is detected by means of the camera, the activating operation comprising a cleaning agent guided on the control panel by a hand of a user (S103).

2. Method according to claim 1,
**characterised in that**
the operation activating the cleaning mode comprises a characteristic movement of the hand of the user (S103).

3. Method according to claim 1 or 2,
**characterised in that**
the operation activating the cleaning mode is detected by identifying a characteristic movement of the hand of the user by means of sensors of the touch-operable control panel.

4. Method according to any of claims 1 to 3,
**characterised in that**
the activation of the cleaning mode of the control panel is acknowledged with a haptic or optical feedback (S105).

5. Method according to any of claims 1 to 4,
**characterised in that**
the cleaning mode is only activated in a predetermined travelling speed range (S104).

6. Method according to claim 5,
**characterised in that**
different travelling speed ranges are predetermined for driver and passenger (S104).

7. Method according to any of claims 1 to 6,
**characterised in that**
the cleaning mode is terminated as soon as no cleaning agent is detected for a predetermined period of time and/or an operation with a finger is detected by means of the camera (S107).

8. Device of a motor vehicle, arranged to detect an operation of a control panel (5) which activates a cleaning mode,
**characterised in that**
the device comprises a camera (3) detecting the activating operation, wherein the activating operation includes a cleaning agent (11) guided on the control panel (5) by a hand (15) of a user.

9. Device according to claim 6,
**characterised in that**
the control panel (5) is designed as a touch display.

## Revendications

1. Procédé permettant d'activer un mode de nettoyage d'une surface de commande tactile d'un véhicule à moteur, dans lequel dans le mode de nettoyage la surface de commande est commuté, au moins en partie, de manière à être désactivé pour éviter un actionnement non intentionnel (S105), **caractérisé en ce que**
- la surface de commande est surveillée par une caméra (S100) et
- un actionnement activant le mode de nettoyage est détecté au moyen de la caméra, l'actionnement activant ledit mode comprend un moyen de nettoyage guidé par une main d'un utilisateur sur la surface de commande (S103).

2. Procédé selon la revendication 1,
**caractérisé en ce que**
l'actionnement activant le mode de nettoyage comprend un mouvement caractéristique de la main de l'utilisateur (S103).

3. Procédé selon la revendication 1 ou 2,
**caractérisé en ce que**
l'actionnement activant le mode de nettoyage est détecté par reconnaissance d'un mouvement caractéristique de la main de l'utilisateur au moyen de détecteurs de la surface de commande tactile.

4. Procédé selon l'une quelconque des revendications 1 à 3,
**caractérisé en ce que**
l'activation du mode de nettoyage de la surface de commande est confirmée au moyen d'un message de retour optique ou haptique (S105).

5. Procédé selon l'une quelconque des revendications 1 à 4,
**caractérisé en ce que**
le mode de nettoyage est activé uniquement dans une plage de vitesses de déplacement prédéfinie (S104).

6. Procédé selon la revendication 5,
**caractérisé en ce que**
des plages de vitesse de déplacement différentes sont définies pour le conducteur et pour le passager (S104).

7. Procédé selon l'une quelconque des revendications 1 à 6,
**caractérisé en ce que**
le mode de nettoyage se termine dès que pour une durée prédéfinie aucun moyen de nettoyage n'est détecté et/ou une utilisation à l'aide d'un doigt (S107) est détectée au moyen de la caméra.

8. Dispositif d'un véhicule à moteur conçu pour reconnaître un actionnement activant un mode de nettoyage d'une surface de commande (5),
**caractérisé en ce que**
le dispositif comprend une caméra (3) qui détecte l'actionnement d'activation, l'actionnement d'activation contenant un moyen de nettoyage (11) guidé par une main (15) d'un utilisateur sur la surface de commande (5).

9. Dispositif selon la revendication 9,
**caractérisé en ce que**
la surface de commande (5) est conçue sous la forme d'un écran tactile.
